# EUROPEAN PATENT SPECIFICATION

(11) **EP 2 116 132 B1**
(45) Date of publication and mention of the grant of the patent: **19.03.2014**
(21) Application number: 08155809.0
(22) Date of filing: 07.05.2008
(51) Int. Cl.: A01K 91/06, A01K 97/00, A01K 97/12

(54) **Intelligent fishing tackle**
Intelligentes Angelgerät
Engin de pêche intelligent

(43) Date of publication of application: 11.11.2009
(73) Proprietor: Tseng, Chien Tu, Junghe City, Taipei (TW)
(72) Inventor: Tseng, Chien Tu, Junghe City, Taipei (TW)
(74) Representative: Viering, Jentschura & Partner Patent- und Rechtsanwälte

(56) References cited:
- WO-A-95/02322
- WO-A-2007/043041
- FR-A- 2 664 468

## Description

### FIELD OF THE INVENTION

The present invention relates to a fishing tackle according to the preamble of claim 1. Accordingly, the present invention generally relates to an intelligent fishing tackle.

### BACKGROUND

A float is an indispensable tool for fishing, a rodster mainly takes a situation that a fish pulls bait to move and a fishing line is dragged at the same time to cause the float to move vertically. Hence, the vertical moving of the float is deemed as an identification mark that the fish is searching the bait.

However, not only that the fish searches the bait might drag the float to be moved vertically, but also many other factors might cause the float to move vertically, for example, an approach of a small inset such as dragonfly, mosquito or fly, wind on water surface or even underwater undercurrent or ripple, might drag the float to move vertically, they could confuse the rodster to differentiate the float movement accuracy. Even if the fish searches the bait to drag the float to move vertically, it does not necessarily mean that the fish has been hooked, the fish might peck the bait and that is all. Besides, the rodster might return a hooked fish back to the water because it is too small or the fish kind does not meet the rodster's requirement, he must replace new bait on the hook again to continue fishing; this is very inconvenient to the rodster. For protecting fish ecological environment, some countries or areas might limit fingerling fishing; the fingerling must be returned back to the water even if it is catched; it has the same inconvenience mentioned above.

Therefore, for improving a fishing tackle structure to allow the rodster to see a picture that a fish searches bait to enable the rodster to judge whether the fish is hooked so as to solve the problem of the low accuracy of the float movement and further to judge whether the fish kind or size meet the rodster's requirement so as to enable the rodster to decide whether to catch the bait searching fish, the present invention is proposed.

A fishing tackle of the initially-mentioned type is known from WO 95/02322 A. FR 2 664 468 A discloses another fishing tackle.

### SUMMARY OF THE INVENTION

The present invention provides an intelligent fishing tackle as defined in claim 1. Further embodiments of the present invention are described in the dependent claims.

The microprocessor system module according to the present invention judges the fishing object through the underwater images and can determine whether to capture the fishing object directly under the water or transmit the underwater image to a water shore for a rodster to see and decide whether to capture the fishing object.

### BRIEF DESCRIPTION OF THE DRAWINGS

The present invention can be more fully understood by reference to the following description and accompanying drawings, in which:

FIG. 1 is a schematic view, showing an intelligent fishing tackle of a first preferred embodiment according to the present invention;

FIG. 2 is a block diagram, showing an intelligent fishing tackle of a first preferred embodiment according to the present invention;

FIG. 3 is a block diagram, showing an intelligent fishing tackle of a second preferred embodiment according to the present invention;

FIG. 4 is a schematic view, showing an intelligent fishing tackle of a third preferred embodiment according to the present invention;

FIG. 5 is a block diagram, showing an intelligent fishing tackle of a fourth preferred embodiment according to the present invention;

FIG. 6 is a block diagram, showing an intelligent fishing tackle of a fifth preferred embodiment according to the present invention;

FIG. 7 is a block diagram, showing an intelligent fishing tackle of a sixth preferred embodiment according to the present invention;

### DETAILED DESCRIPTION OF THE PREFERRED EMBODIMENTS

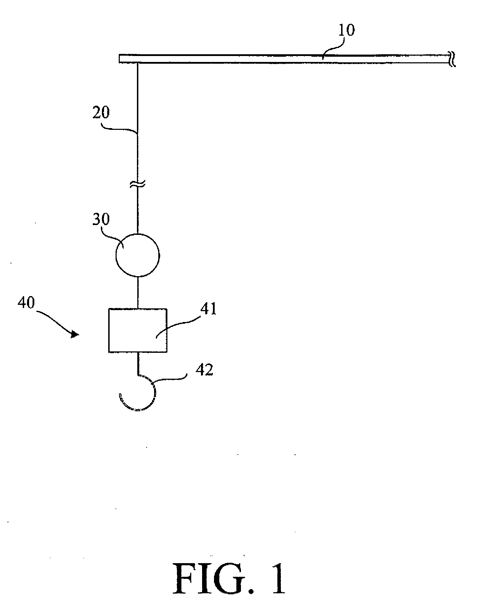

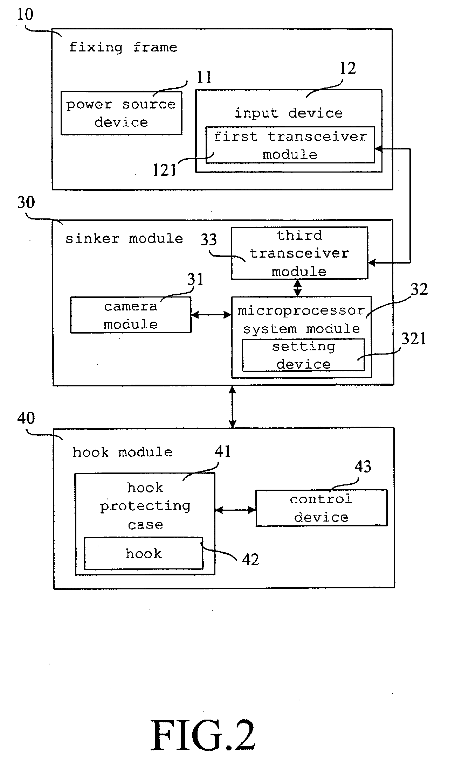

Please refer to FIGS. 1 and 2. FIGS. 1 and 2 show an intelligent fishing tackle of a first preferred embodiment according to the present invention. The fishing tackle comprises a fishing line 20, a sinker module 30 and a hook module 40.

The fishing line 20 is made from a nylon material or a carbon fiber material and tied up on a fixing frame 10. The fixing frame 10 is fixed on a shore or a boat. The fixing frame 10 can be a fixing pole.

The sinker module 30 comprising a camera module 31 and a microprocessor system module 32 is installed on the fishing line, in which the camera module 31 is used for capturing an underwater image and the microprocessor system module 32 is used for judging a fishing object according to the underwater image and deciding whether to generate a control signal. Furthermore, the microprocessor system module 32 can judge a fishing object's kind or size separately according to the underwater image, and can also judge a fishing object's kind and size at the same time. Besides, a setting device 321 is disposed in the microprocessor system module 32. The setting device 321 allows a rodster to disable or enable the microprocessor system module 32 to judge the fishing object. And then the hook module 40 can be in a traditional fishing state or controlled by the microprocessor system module 32 according to a preset value set by the setting device 321.

The camera module 31 mentioned above can be a CCD camera lens or a CMOS camera lens, and the microprocessor system module 32 can be a System On Chip (SOC).

The hook module 40 is connected on the fishing line 20 and can be switched to be a fishing processing state or a fishing stopping state according the control signal. The hook module 40 comprises a hook protecting case 41, a hook 42 and a control device 43, in which the hook 42 is equipped in the hook protecting case 41 and let the hook 42 out the hook protecting case 41 according to the control signal through the control device 43 so as to switch to the fishing processing state. Moreover, the control device 43 can also pull the hook 42 back into the hook protecting case 41 according to the control signal so as to switch to the fishing stopping state.

According to the structure disclosed by the present invention, a power source device 11 can further be equipped on the fixing frame 10 used for transmitting power needed for the sinker module 30 and the hook module 40 to them through the fishing line 20 or a separately installed power source line.

When a rodster is fishing, the camera module 31 will continuous capturing the underwater image and transmit it to the microprocessor system module 32, and when the fishing object is near, the microprocessor system module 32 judges the fishing object's kind or size according to the underwater image to decide whether to generate a control signal to enable the hook module 40 to be switched to the fishing processing state or the fishing stopping state so as to judge whether to catch the fishing object directly under the water. If the fishing object's kind or size does not meet the user's requirement, the microprocessor system module 32 does not issue the control signal to the hook module 40, but if the hook 42 is already out of the hook protecting case 41, the microprocessor system module 32 will generate the control signal to the hook module 40 to pull the hook 42 back into the hook protecting case 41 to prevent the fishing object, not meeting the rodster's requirement, from being hooked; this can solve the conventional problem that the fishing object not meeting the rodster's requirement is released back to the water after the fishing object is hooked so as to elevate the fishing convenience. If the fishing object's kind or size meets the rodster's requirement, the microprocessor system module 32 will generate the control signal and transmit it to the hook module 40 and let the hook 42 out of the hook protecting case 41 to wait for the fishing object to be hooked.

Furthermore, the rodster also allows the camera module 31 to stop capturing the underwater image through the setting device 321 and the microprocessor system module 32 to stop judging the fishing object so as to enable the hook module 40 to maintain a traditional fishing state to wait for the fishing object to be hooked.

In the structure mentioned above, the fishing tackle can further includes an input device 12; it is positioned on the fixing frame 10 to allow the rodster to input commands to process operation and input desired fishing objects' kinds and sizes. Moreover, the rodster can set or adjust preset values of the setting device 321 by operating the input device 12 to cause the camera module 31 to stop capturing the water images and the microprocessor system module 32 to stop judging the fishing depending on the commands. Besides, the rodster inputs commands and the microprocessor system module 32 generates a control signal depending the commands to cause the hook module 40 to be switched to the fishing processing state or the fishing stopping state.

The input device 12 comprises a first transceiver module 121 and the sinker module 30 comprises a third transceiver 33. When the user keys in commands through the input device 12, the first transceiver module 121 transmits the commands to the third transceiver module 33 to control the camera module 31 and the microprocessor system module 32.

The input device 12 can be a keyboard or touch screen. Furthermore, the first transceiver module 121 can be connected to the third transceiver module 33 through the fishing line 20, a transmission line or a wireless transmission mode to process transmission. A wireless communication protocol adopted for the wireless transmission mode can be chosen from one of Bluetooth, WiMax, 802.12, 802.12a, 802.12b, 802.12g, 802.12i, 802.1xand communication protocols used in other wireless internet technologies.

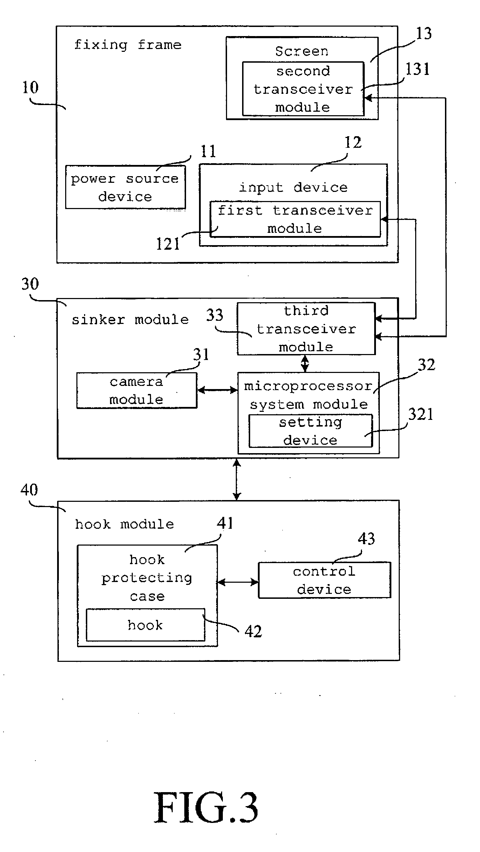

Please refer to FIG. 3. FIG. 3 shows a fishing tackle of a second preferred embodiment according to the present invention.

The fishing tackle further comprises a screen 13 installed on the fixing frame 10. The screen 13 comprises a second transceiver module 131 that can receive the underwater image transmitted from the third transceiver module 33 and transmit the underwater image to the screen 13 to be displayed thereon. Here, the second transceiver module 131 can be connected with the third transceiver module 33 to process transmission through the fishing line 20, a transmission line or a wireless transmission mode. A wireless communication protocol adopted for the wireless transmission mode can be chosen from one of Bluetooth, WiMax, 802.12, 802.12a, 802.12b, 802.12g, 802.12i, 802.1x and communication protocols used in other wireless internet technologies.

The underwater image being displayed on the screen 13 allows the user to see not only a situation that a fishing object searches bait but also a situation that every kind of living beings moves underwater so as to increase the fun of the rodster while fishing. Furthermore, the rodster can judge the fishing object's kind or size through the screen 13 and operate the input device 12 to enable the hook module 40 to be switched to the fishing processing state or the fishing stopping state.

The first transceiver module 121 and the second transceiver module 131 mentioned above can be separated, depending on a practical design requirement, or be as the same transceiver module to be shared by the input device 12 and the screen 13 for processing the transmission.

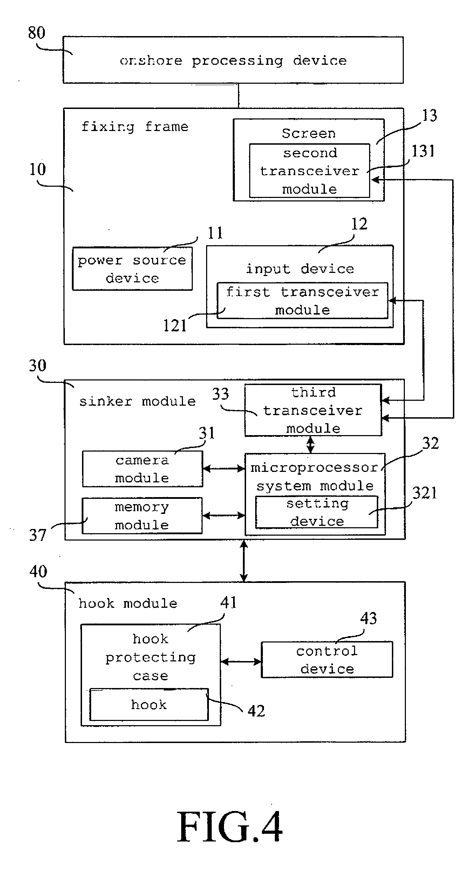

Please refer to FIG. 4. FIG. 4 shows a fishing tackle of a third preferred embodiment according to the present invention.

The fishing tackle further comprises a memory module 37 installed in the sinker module 30 or the screen 13 and used for storing the underwater images captured by the camera module 31 and in the meantime the underwater images are displayed through the screen 13 anytime; this allows the user to see not only a situation that a fishing object searches bait but also a situation that every kind of underwater creature moves so as to increase the fun of the rodster while fishing. Besides, the fixing frame 10 can also be connected to an onshore processing device 80 such as personal computer, notebook computer, PDA or cellular phone on shore. The processing device 80 can be used for setting or adjusting a preset value of the setting device 321 to allow the camera module 31 to stop capturing underwater images and the microprocessor system module 32 to stop judging the fishing object depending on commands. Besides, the rodster keys in the commands through the onshore processing device 80 and the microprocessor system module 32 generates the control signal depending on the command to allow the sinker module 40 to be switched between the fishing processing state or the fishing stopping state. Moreover, the onshore processing device 80 can not only be taken as the input device 12 but also display the underwater images so as to replace the input device 12 or the screen 13 to decrease the production cost of the intelligent fishing tackle and increase the use convenience thereof.

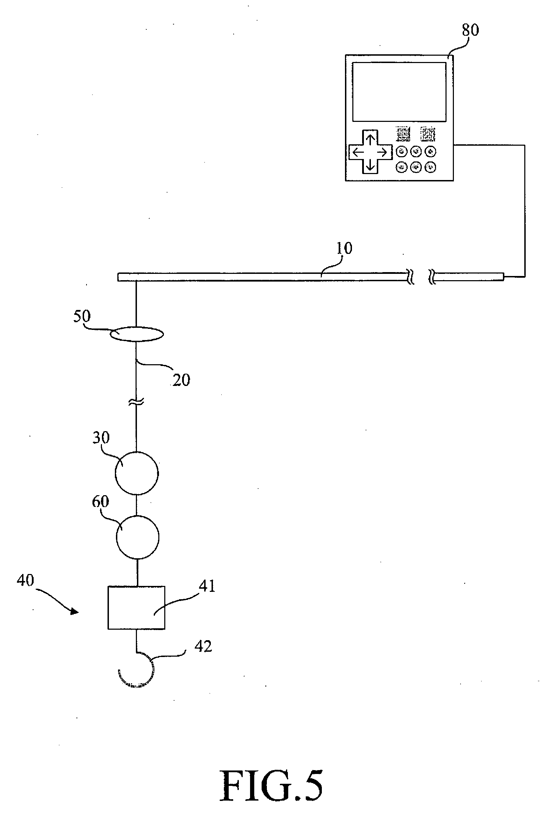

Please refer to FIG. 5. FIG. 5 shows a fishing tackle of a fourth preferred embodiment according to the present invention.

In the embodiment, a float 50 and weight balance module 60 can further be installed on the fishing line 20. The weight balance module 60 can be used for increasing weight and increasing the stability of the sinker module 30 to allow the camera module 31 not to be wavered randomly while capturing the underwater images.

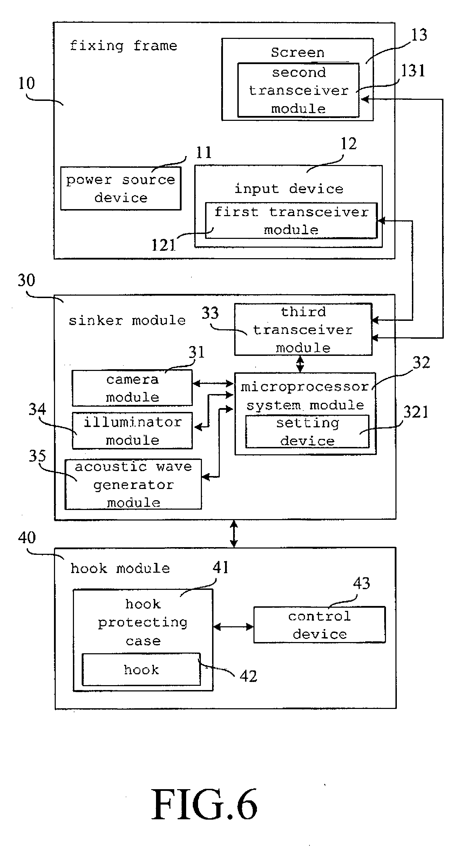

Please refer to FIG. 6. FIG. 6 shows a fishing tackle of a fifth preferred embodiment according to the present invention.

The sinker module 30 further includes an illuminator module 34 used for not only providing a light source needed when the camera module 31 is capturing the underwater images but also generating at least one flash to attract the fishing object to be close or intimidate the fishing object to leave. Furthermore, an acoustic wave (sound) generator module 35 can also be installed in the sinker module 30. The acoustic wave generator module 35 is used for generating at least one sound wave to attract the fishing object to be near or intimidate the fishing object to go for away. Whereby, the chance that the fishing object required for the rodster is hooked can be increased, and the number of captured fishes can be increased.

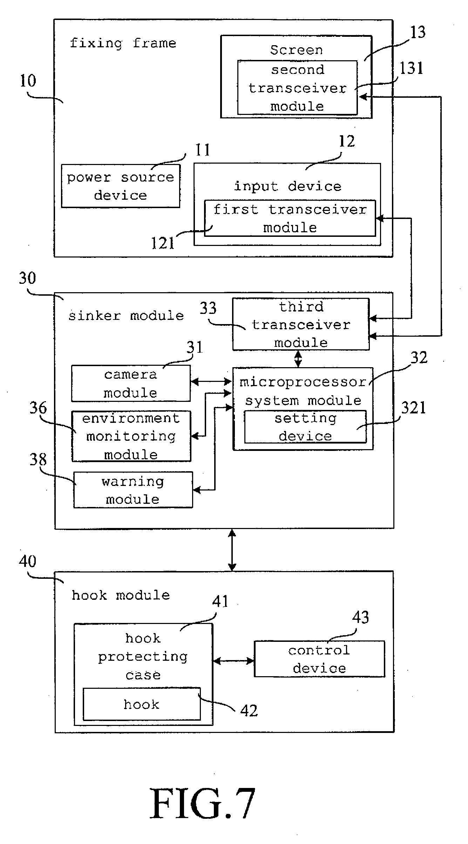

Please refer to FIG. 7. FIG. 7 shows a fishing tackle of a sixth preferred embodiment according to the present invention.

For increasing the fishing convenience of the rodster and allowing the user to handle the fishing environment factors, the sinker module 30 further includes an environment monitoring module 36 used for measuring temperature, water depth, water turbidity, water flow speed and etc, and transmitting them to the screen 13 to be displayed through it via the third transceiver module 33 and the second transceiver 131 to enable the rodster to handle the fishing environment.

Besides, the fishing tackle further includes a warning module 38. The microprocessor system module 32 sends a warning signal to the warning module 38 to allow the warning module 38 to inform ashore so as to generate a signal such as sound or flash to attract the rodster attention so as to increase the use convenience of the fishing tackle when the fishing object strikes the bait on the hook 42 or is hooked.

Additional advantages and modifications will readily occur to those skilled in the art. Therefore, the invention in its broader aspects is not limited to the specific details and representative embodiments shown and described herein. Accordingly, various modifications may be made without departing from the scope of the general inventive concept as defined by the appended claims.

## Claims

1. An intelligent fishing tackle, comprising:
a fishing line (20);
a sinker module (30), installed on said fishing line (20) and comprising:
a camera module (31), used for capturing a underwater image; and
a microprocessor system module (32), judging a fishing object depending on said underwater image and deciding whether to generate a control signal; and
a hook module (40), installed on said fishing line and switching to a fishing processing state depending on said control signal;
**characterized by** said hook module (40) comprising:
a hook protecting case (41);
a hook (42), equipped in said hook protecting case (41); and
a control device (43); letting said hook (42) out of said hook protecting case (41) depending on said control signal, and used for switching to a fishing processing state,
wherein said control signal allows said hook (42) to be pulled back into said hook protecting case (41) to switch to a fishing stopping state.

2. The intelligent fishing tackle according to claim 1, wherein said sinker module (30) further comprises at least one of an illuminator module (34) and a sound wave generating module (35).

3. The intelligent fishing tackle according to claim 1, wherein said microprocessor system module (32) comprises a setting device (321), said microprocessor system module (32) chooses whether to stop functions thereof depending on a preset value of said setting device (321) to allow said hook module (40) to be maintained in a traditional fishing state.

4. The intelligent fishing tackle according to claim 1, further comprising a weight balance module (60) installed on said fishing line (20).

5. The intelligent fishing tackle according to claim 1, further comprising a fixing frame (10) used for connecting with said fishing line (20).

6. The intelligent fishing tackle according to claim 5, further comprising a power source device (11) positioned on said fixing frame (10) and transmitting power to said sinker module (30) and said hook module (40) through one of a power source line and said fishing line (20).

7. The intelligent fishing tackle according to claim 5, further comprising an input device (12) positioned on said fixing frame (10) and used for allowing a rodster to input a command; said input device (12) comprising a first transceiver module (121) and said sinker module (30) comprising a third transceiver module (33); said first transceiver module (121) transmitting said command to said third transceiver module (33); said microprocessor system module (32) starting judging a fishing object according to said command, and generating said control signal according to said command to allow said hook module (40) to be switched to a fishing processing state.

8. The intelligent fishing tackle according to claim 7, wherein said microprocessor system module (32) stops judging said fishing object according to said command, and generates said control signal according to said command to allow said hook module (40) to be switched to a fishing stopping state.

9. The intelligent fishing tackle according to claim 5, further comprising a screen (13) positioned on said fixing frame (10); said screen (13) comprising a second transceiver module (131) and said sinker module (30) comprising a third transceiver module (33); said third transceiver module (33) transmits said underwater image to said second transceiver module (131) to display said underwater image through said screen (13).

10. The intelligent fishing tackle according to claim 9, wherein said sinker module (30) further comprises an underwater environment monitor module (36) and a display of monitoring results is processed through said screen (13).

11. The intelligent fishing tackle according to claim 5, further comprising an onshore processing device (80) connected with said fixing frame (10).

12. The intelligent fishing tackle according to claim 1, further comprising a memory module (37) used for storing said underwater image.

13. The intelligent fishing tackle according to claim 1, further comprising a warning module (38), said microprocessor system module (32) issuing a warning signal to said warning module (38) to inform a rodster when said hook module (40) catches a fishing object.

## Patentansprüche

1. Eine intelligente Angelvorrichtung, aufweisend:
eine Angelschnur (20),
ein Senkmodul (30), das an der Angelschnur (20) angebracht ist und aufweist:
ein Kameramodul (31), das zum Erfassen eines Unterwasserbildes verwendet wird, und
ein Mikroprozessor-System-Modul (32), das ein Angelobjekt in Abhängigkeit von dem Unterwasserbild beurteilt und entscheidet, ob ein Steuersignal zu erzeugen ist, und
ein Hakenmodul (40), das an der Angelschur angebracht ist und in Abhängigkeit von dem Steuersignal in einen Angelvorgang-Zustand umschaltet,
**dadurch gekennzeichnet, dass** das Hakenmodul (40) aufweist:
ein Haken-Schutzgehäuse (41),
einen Haken (42), der in dem Haken-Schutzgehäuse (41) vorgesehen ist, und
eine Steuervorrichtung (43), die den Haken (42) in Abhängigkeit von dem Steuersignal aus dem Haken-Schutzgehäuse (41) herauslässt und zum Umschalten in einen Angelvorgang-Zustand verwendet wird,
wobei das Steuersignal ermöglicht, dass der Haken (42) in das Haken-Schutzgehäuse (41) zurückgezogen wird, um in einen Angel-Stopp-Zustand umzuschalten.

2. Die intelligente Angelvorrichtung gemäß Anspruch 1, wobei das Senkmodul (30) ferner mindestens eines von einem Beleuchtungsmodul (34) und einem Schallwellen-Erzeugungsmodul (35) aufweist.

3. Die intelligente Angelvorrichtung gemäß Anspruch 1, wobei das Mikroprozessor-System-Modul (32) eine Einstellvorrichtung (321) aufweist, wobei das Mikroprozessor-System-Modul (32) in Abhängigkeit von einem voreingestellten Wert der Einstellvorrichtung (321) auswählt, ob Funktionen davon zu stoppen sind, um zu ermöglichen, dass das Hakenmodul (40) in einem traditionellen Angelzustand gehalten wird.

4. Die intelligente Angelvorrichtung gemäß Anspruch 1, ferner ein Gewichts-Ausgleichs-Modul (60) aufweisend, das an der Angelschnur (20) angebracht ist.

5. Die intelligente Angelvorrichtung gemäß Anspruch 1, ferner eine Befestigungsstruktur (10) aufweisend, die zum Anschließen an die Angelschnur (20) verwendet wird.

6. Die intelligente Angelvorrichtung gemäß Anspruch 5, ferner eine Energiequellenvorrichtung (11) aufweisend, die an der Befestigungsstruktur (10) angeordnet ist und durch eine von einer Energiequellenleitung und der Angelschnur (20) Energie an das Senkmodul (30) und das Hakenmodul (40) überträgt.

7. Die intelligente Angelvorrichtung gemäß Anspruch 5, ferner eine Eingabevorrichtung (12) aufweisend, die an der Befestigungsstruktur (10) angeordnet ist und verwendet wird, um einem Angler zu ermöglichen, einen Befehl einzugeben, wobei die Eingabevorrichtung (12) ein erstes Sende-Empfangs-Modul (121) aufweist und das Senkmodul (30) ein drittes Sende-Empfangs-Modul (33) aufweist, wobei das erste Sende-Empfangs-Modul (121) den Befehl an das dritte Sende-Empfangs-Modul (33) übermittelt, wobei das Mikroprozessor-System-Modul (32) gemäß dem Befehl beginnt, ein Angelobjekt zu beurteilen, und gemäß dem Befehl das Steuersignal erzeugt, um zu ermöglichen, dass das Hakenmodul (40) in einen Angelvorgang-Zustand umgeschaltet wird.

8. Die intelligente Angelvorrichtung gemäß Anspruch 7, wobei das Mikroprozessor-System-Modul (32) gemäß dem Befehl das Beurteilen des Angelobjekts stoppt und gemäß dem Befehl das Steuersignal erzeugt, um zu ermöglichen, dass das Hakenmodul (40) in einen Angel-Stopp-Zustand umgeschaltet wird.

9. Die intelligente Angelvorrichtung gemäß Anspruch 5, ferner einen Bildschirm (13) aufweisend, der an der Befestigungsstruktur (10) angeordnet ist, wobei der Bildschirm (13) ein zweites Sende-Empfangs-Modul (131) aufweist und das Senkmodul (30) ein drittes Sende-Empfangs-Modul (33) aufweist, wobei das dritte Sende-Empfangs-Modul (33) das Unterwasserbild an das zweite Sende-Empfangs-Modul (131) übermittelt, um das Bild durch den Bildschirm (13) anzuzeigen.

10. Die intelligente Angelvorrichtung gemäß Anspruch 9, wobei das Senkmodul (30) ferner ein Unterwasser-Umgebungs-Überwachungs-Modul (36) aufweist und eine Anzeige der Überwachungsergebnisse durch den Bildschirm (13) erfolgt.

11. Die intelligente Angelvorrichtung gemäß Anspruch 5, ferner eine Land-Verarbeitungs-Vorrichtung (80) aufweisend, die mit der Befestigungsstruktur (10) verbunden ist.

12. Die intelligente Angelvorrichtung gemäß Anspruch 1, ferner ein Speichermodul (37) aufweisend, das zum Speichern des Unterwasserbildes verwendet wird.

13. Die intelligente Angelvorrichtung gemäß Anspruch 1, ferner ein Warnmodul (38) aufweisend, wobei das Mikroprozessor-System-Modul (32) ein Warnsignal an das Warnmodul (38) ausgibt, um einen Angler zu informieren, wenn das Hakenmodul (40) ein Angelobjekt fängt.

## Revendications

1. Un appareil de pêche intelligent, comprenant :
une ligne de pêche (20),
un module de baisse (30), installé sur ladite ligne de pêche (20) et comprenant :
un module de caméra (31), utilisé pour capturer une image subaquatique, et
un module de système à microprocesseur (32), jugeant un objet de pêche en fonction de ladite image subaquatique et décidant si un signal de commande doit être généré, et
un module d'hameçon (40), installé sur ladite ligne de pêche et passant à un état de processus de pêche en fonction dudit signal de commande,
**caractérisé en ce que** ledit module d'hameçon (40) comprend :
une caisse de protection d'hameçon (41),
un hameçon (42) équipé dans ladite caisse de protection d'hameçon (41), et
un dispositif de contrôle (43), faisant sortir ledit hameçon (42) de ladite caisse de protection d'hameçon (41) en fonction du signal de commande, et utilisé pour passer à un état de processus de pêche,
dans lequel ledit signal de commande permet audit hameçon (42) d'être retiré dans ladite caisse de protection d'hameçon (41) afin de passer à un état d'arrêt de pêche.

2. L'appareil de pêche intelligent selon la revendication 1, dans lequel ledit module de baisse (30) comprend en outre au moins un parmi un module illuminateur (34) et un module de génération d'ondes sonores (35).

3. L'appareil de pêche intelligent selon la revendication 1, dans lequel ledit module de système à microprocesseur (32) comprend un dispositif de réglage (321), ledit module de système à microprocesseur (32) choisissant si des fonctions de celui-ci doivent être arrêtées en fonction d'une valeur prédéterminée dudit dispositif de réglage (321), afin de permettre audit module d'hameçon (40) d'être maintenu dans un état traditionnel de pêche.

4. L'appareil de pêche intelligent selon la revendication 1, comprenant en outre un module d'équilibrage de poids (60) installé sur ladite ligne de pêche (20).

5. L'appareil de pêche intelligent selon la revendication 1, comprenant en outre un cadre de fixation (10) utilisé pour un raccordement à ladite ligne de pêche (20).

6. L'appareil de pêche intelligent selon la revendication 5, comprenant en outre un dispositif de source d'énergie (11) positionné sur ledit cadre de fixation (10) et transmettant de l'énergie audit module de baisse (30) et audit module d'hameçon (40) au travers d'une parmi une ligne de source d'énergie et ladite ligne de pêche (20).

7. L'appareil de pêche intelligent selon la revendication 5, comprenant en outre un dispositif d'entrée (12) positionné sur ledit cadre de fixation (10) et utilisé pour permettre à un pêcheur d'entrer une commande, ledit dispositif d'entrée (12) comprenant un premier module émetteur/récepteur (121) et ledit module de baisse (30) comprenant un troisième module émetteur/récepteur (33), ledit premier module émetteur/récepteur (121) transmettant ladite commande audit troisième module émetteur/récepteur (33), ledit module de système à microprocesseur (32) commençant à juger un objet de pêche selon ladite commande et générant ledit signal de commande selon ladite commande, afin de permettre audit module d'hameçon (40) d'être passé à un état de processus de pêche.

8. L'appareil de pêche intelligent selon la revendication 7, dans lequel ledit module de système à microprocesseur (32) arrête de juger ledit objet de pêche selon ladite commande et génère ledit signal de commande selon ladite commande, afin de permettre audit module d'hameçon (40) d'être passé à un état d'arrêt de pêche.

9. L'appareil de pêche intelligent selon la revendication 5, comprenant en outre un écran (13) positionné sur ledit cadre de fixation (10), ledit écran (13) comprenant un deuxième module émetteur/récepteur (131) et ledit module de baisse (30) comprenant un troisième module émetteur/récepteur (33), ledit troisième module émetteur/récepteur (33) transmettant ladite image subaquatique audit deuxième module émetteur/récepteur (131), afin d'afficher ladite image subaquatique au travers dudit écran (13).

10. L'appareil de pêche intelligent selon la revendication 9, dans lequel ledit module de baisse (30) comprend en outre un module de surveillance de l'environnement subaquatique (36), et un affichage de résultats de surveillance est traité au travers dudit écran (13).

11. L'appareil de pêche intelligent selon la revendication 5, comprenant en outre un dispositif de traitement à terre (80) relié audit cadre de fixation (10).

12. L'appareil de pêche intelligent selon la revendication 1, comprenant en outre un module de mémoire (37) utilisé pour enregistrer ladite image subaquatique.

13. L'appareil de pêche intelligent selon la revendication 1, comprenant en outre un module d'alerte (38), ledit module de système à microprocesseur (32) émettant un signal d'alerte audit module d'alerte (38), afin d'informer un pêcheur lorsque ledit module d'hameçon (40) capture un objet de pêche.
